# EUROPÄISCHE PATENTSCHRIFT

(11) **EP 0 649 779 B1**
(45) Veröffentlichungstag und Bekanntmachung des Hinweises auf die Patenterteilung: **15.04.1998**
(21) Anmeldenummer: 94116813.0
(22) Anmeldetag: 25.10.1994
(51) Int. Cl.: B60R 22/46

(54) **Gurtstraffer für Sicherheitsgurt-Rückhaltesysteme in Fahrzeugen**
Belt tensioner for safety belt restraint systems in vehicles
Dispositif tendeur pour systèmes de retenue à ceinture de sécurité pour véhicules

(30) Priorität: 25.10.1993 DE 4336367; 29.04.1994 DE 4415103
(43) Veröffentlichungstag der Anmeldung: 26.04.1995
(73) Patentinhaber: TRW Occupant Restraint Systems GmbH, 73553 Alfdorf (DE)
(72) Erfinder: Schmid, Johannes, D-73527 Schwäbisch Gmünd (DE); Mödinger, Thomas, D-73553 Alfdorf (DE)
(74) Vertreter: Degwert, Hartmut, Dipl.-Phys.

(56) Entgegenhaltungen:
- EP-A- 0 059 643
- EP-A- 0 582 096
- CH-A- 419 852
- DE-U- 9 308 273
- US-A- 3 386 683

## Beschreibung

Die Erfindung betrifft einen Gurtstraffer für Sicherheitsgurt-Rückhaltesysteme in Fahrzeugen, mit einer pyrotechnischen Kolben/Zylinder-Linearantriebseinheit, deren Kolben eine Zahnleiste antreibt, und mit einem ins Schnelle übersetzenden Zahnradgetriebe, das ausgangsseitig an die Gurtspule eines Gurtaufrollers angeschlossen ist und eingangsseitig ein Ritzel aufweist, das mit der Zahnleiste in Eingriff steht.

Ein Gurtstraffer dieser Art ist aus der US-PS 3 386 683 bekannt. Die lineare Antriebseinheit dieses Gurtstraffers besteht aus einem an ein Getriebegehäuse angesetzten Zylinderrohr und einem darin geführten Kolben, an dessen Boden eine Zahnstange angeschlossen ist. Zur Aktivierung des Gurtstraffers wird eine Treibladung gezündet, die dann den Kolben mit unter hohem Druck stehendem Gas beaufschlagt, so daß die Zahnstange im Zylinderrohr verschoben und das mit ihr in Kämmeingriff stehende Ritzel in Drehung versetzt wird. Der Ausgang des Übersetzungsgetriebes ist unmittelbar an die Gurtspule des Gurtaufrollers angekoppelt. Um den durch die Länge des Zylinderrohres bedingten Raumbedarf eines solchen Gurtstraffers nicht noch zu vergrößern, ist der Gasgenerator rechtwinklig zur Achse des Zylinderrohres angeordnet. Aber auch für eine derart abgewinkelte Bauform läßt sich in einem Fahrzeug nur schwer der erforderliche Einbauraum finden.

Bei Gurtstraffern mit pyrotechnischem Antrieb stellt sich allgemein das Problem der Sicherheit bei der Handhabung, bei der Lagerung und beim Transport des Gasgenerators, der in der Regel zuletzt in den Gurtstraffer eingebaut wird. Zur Erfüllung der bestehenden Sicherheitsvorschriften sind aufwendige Vorsichtsmaßnahmen bei der Lagerung, beim Transport und bei der Montage der Gasgeneratoren erforderlich.

Durch die Erfindung wird ein Gurtstraffer mit einer Linearantriebseinheit und einem Zahnradgetriebe zur Verfügung gestellt, der sich durch kompakte Bauform, einfache Herstellung und Montage, geringes Gewicht und niedrige Herstellungskosten auszeichnet. Gemäß der Erfindung ist der Kolben hohl ausgebildet und nimmt in seinem Hohlraum die pyrotechnische Treibladung auf. Ferner ist die Zahnleiste entlang der Mantelfläche des Kolbens selbst ausgebildet. Durch die hohle Ausbildung des Kolbens wird der Bauraum für die Unterbringung eines separaten Gasgenerators vollständig eingespart. Es entfallen aber auch Verluste durch Gasumlenkung, da die von der Treibladung freigesetzten Gase unmittelbar in Axialrichtung auf den Kolben einwirken. Für eine gegebene Strafferleistung kann daher die Menge der pyrotechnischen Treibladung reduziert werden. Durch die Anbringung der Zahnleiste am Mantel des Kolbens selbst wird schließlich axiale Baulänge des Linearantriebs eingespart, so daß insgesamt eine sehr kompakte Bauform erzielt wird, die erstmals die Möglichkeit eröffnet, Gurtstraffer auch an den Rücksitzen eines Fahrzeugs anzuwenden.

Die gattungsbildende DE-U-9308273.8 offenbart einen Gurtstraffer mit einer pyrotechnischen Linearantriebseinheit, deren Kolben eine Zahnleiste, die mit einem Ritzel in Eingriff steht. Die Linearantriebseinheit ist nicht in einem separaten Zylinderrohr aufgenommen.

Eine besonders vorteilhafte Ausführungsform ergibt sich aber dadurch, daß der Kolben in einem Zylinderrohr aufgenommen ist, das in eine Bohrung eines seitlich an den Gurtaufroller angesetzten Getriebegehäuses eingeschoben ist und in seiner Mantelfläche einen Ausschnitt für den Durchtritt des Ritzels aufweist. Das Zylinderrohr bildet mit Kolben, Treibladung und einem geeigneten Zünder eine vormontierte Baugruppe, die als solche von auf pyrotechnische Gasgeneratoren spezialisierten Herstellern zugeliefert werden kann. Wenn das Zylinderrohr darüber hinaus an einem seiner axialen Ende mit einem berstsicheren Anschlag für den Kolben und am anderen Ende mit einem berstsicheren Boden versehen wird, so entsteht eine Linearantriebseinheit, die zu ihrer sicheren Handhabung keiner besonderen Maßnahmen bedarf. Durch Simulation einer mißbräuchlichen Zündung konnte nachgewiesen werden, daß eine solche Linearantriebseinheit keine wesentlichen Kräfte nach außen freisetzt und nahezu in Ruhe verbleibt, da im Inneren des Zylinderrohres einander entgegengesetzt gerichtete Kräfte und Momente auftreten, die sich weitgehend kompensieren.

Ein weiterer Vorteil bei Verwendung einer solchen autarken und eigensicheren Linearantriebseinheit besteht darin, daß an das Getriebegehäuse keine besonderen Anforderungen gestellt werden müssen. Dieses wird lediglich mit einer geeignet dimensionierten Bohrung versehen, in die das Zylinderrohr eingeschoben wird. Insbesondere kann das Getriebegehäuse auf Kunststoff bestehen, wodurch Gewicht und Herstellungskosten eingespart werden. Eine besonders günstige Bauform ergibt sich, wenn das Getriebegehäuse mit einem Federgehäuse kombiniert wird.

Weitere Merkmale und Vorteile der Erfindung ergeben sich aus der vorliegenden Beschreibung und aus der Zeichnung, auf die Bezug genommen wird. In der Zeichnung zeigen:
- Fig. 1 eine Perspektivansicht eines Gurtaufrollers mit seitlich angesetztem Gurtstraffer;

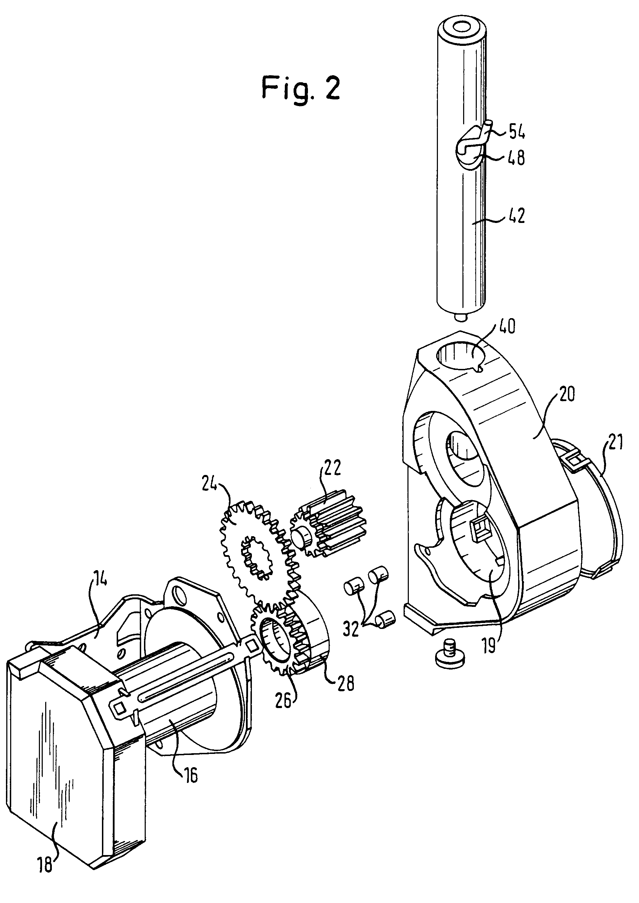

- Fig. 2 eine Explosionsansicht der in Fig. 1 gezeigten Baugruppe;
- Fig. 3a und 3b einen schematischen Schnitt zur Erläuterung der Arbeitsweise des Gurtstraffers im Ruhezustand und nach Aktivierung des Gasgenerators;
- Figuren 4a und 4b entsprechende Ansichten eines Gurtstraffers nach einer anderen Ausführungsform;
- Fig. 5 schematisch die Herstellung einer pyrotechnischen Linearantriebseinheit; und
- Fig. 6a und 6b eine schematische Schnittansicht einer weiteren Ausführungsform des Gurtstraffers im Ruhezustand und nach Aktivierung des Gasgenerators.

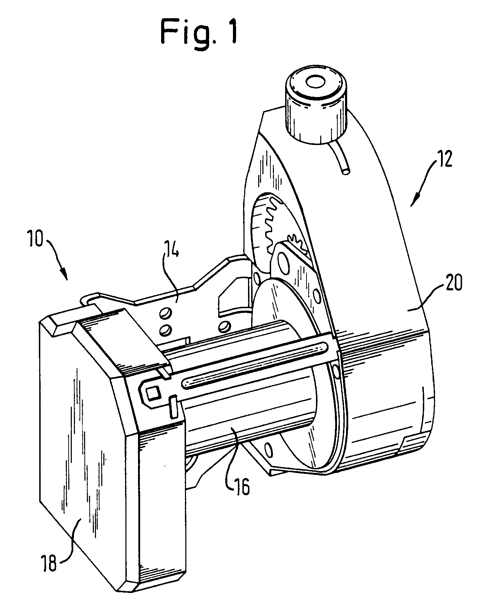

Bei der in Fig. 1 gezeigten, bevorzugten Ausführungsform ist ein allgemein mit 10 bezeichneter Gurtaufroller mit einem allgemein mit 12 bezeichneten Gurtstraffer zu einer Baugruppe kombiniert. Der Gurtaufroller 10 besteht aus einem lasttragenden Rahmen 14, in dem eine Gurtspule 16 drehbar gelagert ist, und einem fahrzeug- sowie gurtbandsensitiven Sperrmechanismus 18, der auf der dem Gurtstraffer 12 gegenüberliegenden Seite des Rahmens 14 angeordnet ist. In dem Gehäuse 20 des Gurtstraffers ist ferner ein Aufnahmeraum 19 für die Aufwickelfeder des Gurtstraffers enthalten, der durch einen Deckel 21 verschlossen wird.

Das vorzugsweise aus einem Kunststoff bestehende Gehäuse 20 nimmt ein Zahnradgetriebe und eine Kupplung sowie eine pyrotechnische Linearantriebseinheit auf. Das Zahnradgetriebe besteht aus einem eingangsseitigen Ritzel 22, einem mit diesem drehfest verbundenen ersten Zahnrad 24 sowie einem mit diesem in Kämmeingriff stehenden zweiten Zahnrad 26. Das zweite Zahnrad 26 ist einteilig mit einem Kupplungsring 28 ausgebildet, der einen seitlichen Antriebsfortsatz 30 der Gurtspule 16 im radialen Abstand umgibt. Die dem Antriebsfortsatz 30 zugewandte Innenfläche des Kupplungsrings 28 ist mit Rampenflächen versehen, auf denen drei Klemmwalzen 32 abgestützt sind.

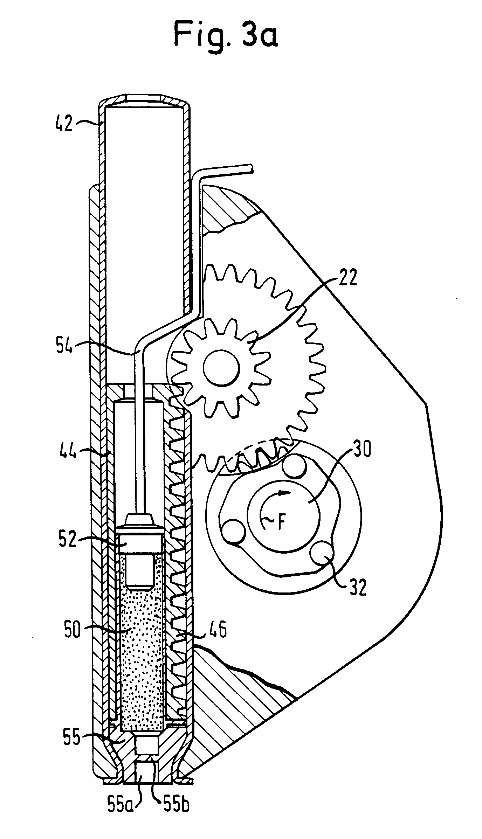

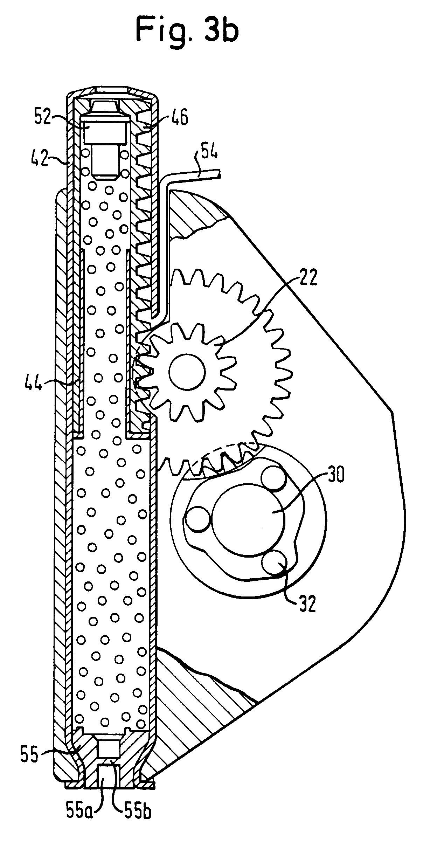

Das Ritzel 22 bildet mit den Zahnrädern 24 und 26 ein ins Schnelle übersetzendes Zahnradgetriebe. Durch die Klemmwalzen 32 wird bei Drehung des Kupplungsrings 28 im Uhrzeigersinn in Fig. 3a (Pfeil F) eine triebschlüssige Verbindung zwischen dem Zahnrad 26 und dem Antriebsfortsatz 30 der Gurtspule 16 hergestellt.

In eine zylindrische Bohrung 40 des Gehäuses 20 ist ein Zylinderrohr 42 eingesetzt, welches mit seinem freien Ende geringfügig aus der Bohrung 40 herausragt. Im Inneren des Zylinderrohres 42 ist ein hohler Kolben 44 aufgenommen. Auf der dem Ritzel 22 zugewandten Seite ist die Mantelfläche des Kolbens 44 als Zahnleiste mit einer Verzahnung 46 ausgebildet. Das Ritzel 22 ragt durch einen Ausschnitt 48 in der Wandung des Zylinderrohres 42 in dessen Innenraum hinein und steht mit der Verzahnung 46 in beginnendem Kämmeingriff. Die axiale Länge des Kolbens 44 ist kleiner als die des Zylinderrohres 42, so daß der Kolben 44 im Inneren des Zylinderrohres 42 verschiebbar ist.

In den Innenraum des hohlen Kolbens 44 ist eine pyrotechnische Treibladung 50 eingebracht. Im Inneren des Kolbens befindet sich ferner ein elektrischer Zünder 52, der über eine durch den Ausschnitt 48 herausgeführte elektrische Leitung 54 aktivierbar ist.

Der Boden des Zylinderrohres 42 ist konisch verjüngt und mit einem eingesetzten Stopfen 55 versehen. Dieser Stopfen 55 besitzt einen axialen Durchlaß 55a, der durch eine Berstscheibe 55b verschlossen ist. Die Berstscheibe 55b ist so dimensioniert, daß sie dem normalen Betriebsdruck der gezündeten Treibladung 50 standhält, jedoch bei durch Mißbrauch oder einen Fahrzeugbrand überhöhtem Druck nachgibt, um ein Bersten des Gehäuses 20 sicher zu verhindern.

Bei Aktivierung des Zünders 52 wird der pyrotechnische Treibsatz 50 gezündet. Durch die nun erzeugten, unter hohem Druck stehenden Gase wird der Kolben 44 im Zylinderrohr 42 vorgeschoben, wobei die lineare Bewegung des Kolbens 44 durch den Kämmeingriff zwischen der Verzahnung 46 und dem Ritzel 22 in eine Drehbewegung dieses Ritzel umgesetzt. Über das Zahnradgetriebe und die Klemmwalzen-Kupplung wird schließlich die Gurtspule in Drehung versetzt, um Gurtband aufzuwickeln und so die Gurtlose aus dem Gurtsystem herauszuziehen.

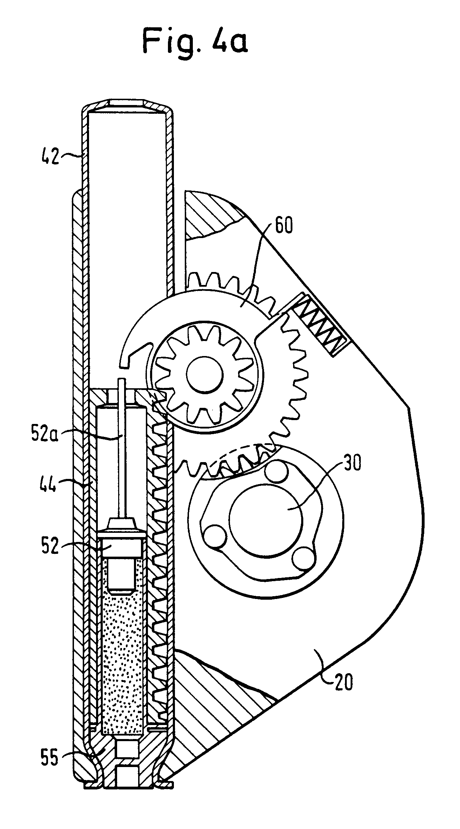

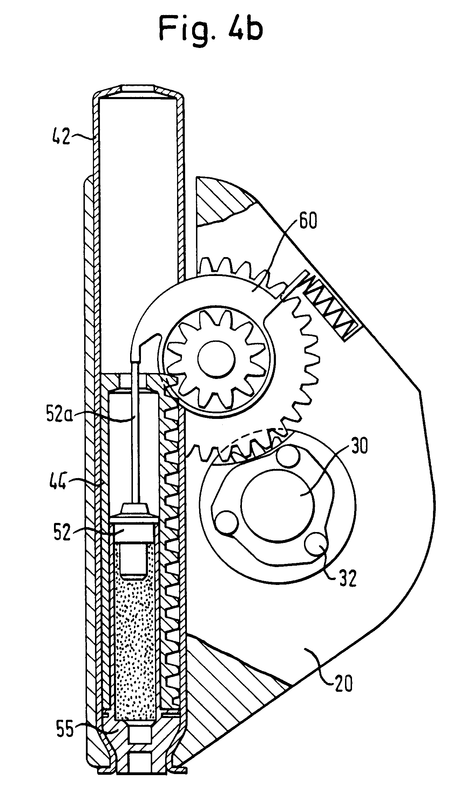

Bei der in den Figuren 4a und 4b gezeigten Ausführungsvariante erfolgt die Zündung nicht elektrisch, sondern mechanisch, da der Zünder 52 als Schlagzünder mit einem durch das offene Ende des Kolbens 44 herausragenden Schlagstift 52a ausgebildet ist. Ein federnd vorbelastetes, schwenkbar gelagertes Schlagstück 60 wird durch einen (nicht gezeigten) fahrzeugsensitiven Sensor bei starker Fahrzeugverzögerung freigegeben und schlägt auf dem Schlagstift 52a auf, wodurch der Zünder 52 aktiviert wird. Durch die anschließende Kolbenbewegung wird das Schlagstück 60 zurückgeschwenkt.

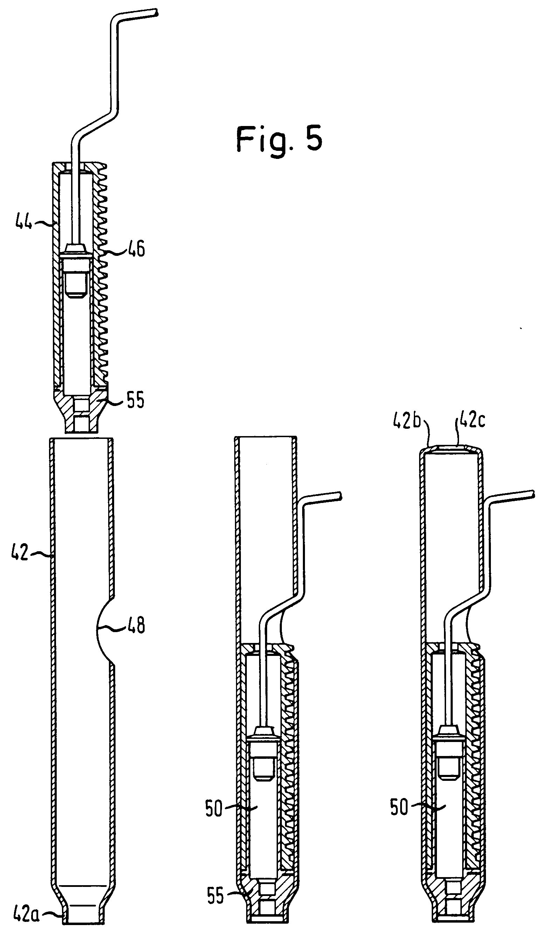

Das Zylinderrohr 42 wird vorzugsweise aus gestanztem und gerolltem, an der Stoßfuge verschweißtem Stahlblech gefertigt. Eines der beiden axialen Enden des Zylinderrohres wird radial einwärts verformt, wobei dieses verjüngte Ende 42a einen Sitz für den Stopfen 55 bildet. Wie in Fig. 5 dargestellt ist, wird das andere Ende 42b des Zylinderrohres 42 nach dem Einsetzen des bereits mit der Treibladung 50 versehenen Kolbens 44 durch Umbördeln teilweise verschlossen. Durch die verbleibende Öffnung 42c kann die vom Kolben 44 verdrängte Luft entweichen. Wie weiterhin aus Fig. 3a bis 4b ersichtlich ist, kann die Befestigung des Zylinderrohres 42 am Gehäuse 20 dadurch erfolgen, daß das verjüngte Ende 42a durch eine Bodenöffnung des Gehäuses 20 gesteckt und das herausragende Ende nach außen umgebördelt wird.

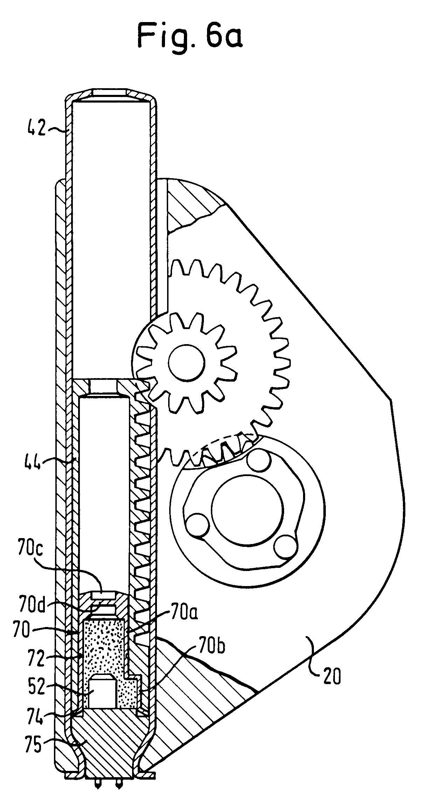

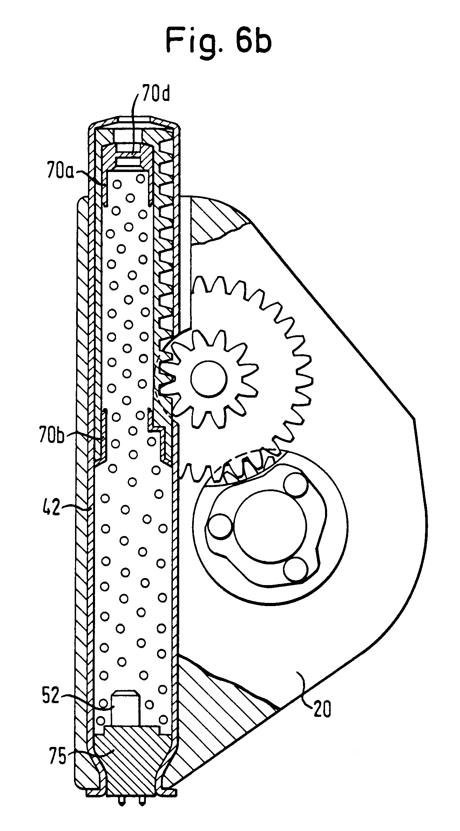

Bei der Ausführungsform nach den Figuren 6a und 6b ist in den mit einer Stufe versehenen Hohlraum des Kolbens 44 eine Treibladungs-Patrone 70 eingesetzt, die den elektrischen Zünder 52 beinhaltet. Die Treibsatz-Patrone 70 weist eine Hülse aus zwei an einer Sollbruch-Nut 72 miteinander verbundenen Abschnitten 70a und 70b auf. Der Abschnitt 70b bildet an seinem einem Stopfen 75 zugewandten Ende eine Dichtlippe 74, die dichtend mit der Wandung des Zylinderrohres 42 in Eingriff steht. Der Abschnitt 70a ist an seinem vom Zünder 52 abgewandten Ende mit einem Boden versehen, der wie der Stopfen 55 bei der zuvor beschriebenen Ausführungsform mit einem axialen Durchgang 70c sowie mit einer Berstscheibe 70d versehen ist.

Bei Aktivierung der Treibsatz-Patrone 70 werden die Abschnitte 70a, 70b an der Sollbruch-Nut 72 getrennt, und der Abschnitt 70a wird im Kolben 44 hochgedrückt, bis er die Öffnung an seinem oberen Ende dichtend verschließt (Fig. 6b). Der Abschnitt 70b verbleibt hingegen am unteren Ende des Kolbens 44 und gewährleistet durch seine Dichtlippe 74 die Abdichtung am Zylinderrohr 42. Der Zünder 52 wird gegen den Stopfen 75 gedrückt, wodurch dieser das verjüngte Ende des Zylinderrohres 42 abdichtet. Diese Ausführungsform ist Praktisch frei von Druckverlusten und durch die Berstscheibe 70d dennoch berstsicher.

## Patentansprüche

1. Gurtstraffer für Sicherheitsgurt-Rückhaltesysteme in Fahrzeugen, mit einer pyrotechnischen Kolben/Zylinder-Linearantriebseinheit, deren Kolben (44) eine Zahnleiste (46) antreibt, und mit einem ins Schnelle übersetzenden Zahnradgetriebe (22, 24, 26), das ausgangsseitig an die Gurtspule (16) eines Gurtaufrollers angeschlossen ist und eingangsseitig ein Ritzel (22) aufweist, das mit der Zahnleiste in Eingriff steht, wobei die Zahnleiste (46) entlang der Mantelfläche des Kolbens (44) ausgebildet ist und in dem hohl ausgebildeten Kolben eine pyrotechnische Treibladung (50) angeordnet ist, dadurch gekennzeichnet, daß der Kolben (44) in einem Zylinderrohr (42) aufgenommen ist, das in eine Bohrung (40) eines seitlich an den Gurtaufroller angesetzten Getriebegehäuses (20) eingeschoben ist und in seiner Mantelfläche einen Ausschnitt (48) für den Durchtritt des Ritzels (22) aufweist.

2. Gurtstraffer nach Anspruch 1, dadurch gekennzeichnet, daß das Zylinderrohr (42) an einem seiner axialen Enden (42b) mit einem berstsicheren Anschlag für den Kolben (44) und am anderen Ende (42a) mit einem Stopfen (55) versehen ist, der einen axialen Durchgang (55a) und eine diesen verschließende Berstscheibe (55b) aufweist.

3. Gurtstraffer nach Anspruch 1, dadurch gekennzeichnet, daß in den Innenraum des hohl ausgebildeten Kolbens (44) eine pyrotechnische Treibladungs-Patrone (70) eingesetzt ist, die zwei an einer Sollbruch-Nut (72) miteinander verbundene Hülsenabschnitte (70a, 70b) aufweist, von denen der eine (70a) einen Boden mit einem durch eine Berstscheibe (70d) verschlossenen axialen Durchgang (70c) bildet und der andere (70b) eine Dichtlippe (74) aufweist, die mit der Wandung des Zylinderrohres (42) in Dichteingriff steht.

4. Gurtstraffer nach Anspruch 2 oder 3, dadurch gekennzeichnet, daß die aus Zylinderrohr (42), Kolben (44), Treibladung (50) und einem Zünder (52) bestehende Linearantriebseinheit eine vormontierte Baugruppe bildet.

5. Gurtstraffer nach Anspruch 4, dadurch gekennzeichnet, daß der Zünder (52) als Schlagzünder ausgebildet ist und einen einer Öffnung an einem axialen Ende des Kolbens herausragenden Schlagstift (52a) aufweist.

6. Gurtstraffer nach einem der vorstehenden Ansprüche, dadurch gekennzeichnet, daß das Zahnradgetriebe ein mit dem Ritzel (22) drehfest verbundenes erstes Zahnrad (24) und ein mit diesem in Kämmeingriff stehendes zweites Zahnrad (26) aufweist, das mit einem Kupplungsring (28) starr verbunden ist, daß der Kupplungsring (28) einen seitlichen Antriebsfortsatz (30) der Gurtspule (16) umgibt und daß zwischen dem Antriebsfortsatz (30) und dem Kupplungsring (28) mehrere Kupplungswalzen (32) angeordnet sind.

## Claims

1. A belt tensioner for vehicular seat belt restraining systems comprising a pyrotechnical piston/cylinder linear drive unit, the piston (44) of which drives a tooth rack (46), and a step-up gear (22, 24, 26) which is connected at its output end to the belt reel (16) of a belt retractor and having at its input end a pinion (22) which meshes with the tooth rack, the tooth rack (46) being formed along the envelope of the piston (44) and a pyrotechnical propelling charge (50) being accommodated in said piston which is hollow, characterized in that said piston (44) is accommodated in a cylinder tube (42) which is inserted in a bore (40) of a gear housing (20) applied to the side of the belt retractor and which has a cutout (48) in its envelope for the penetration of the pinion (22).

2. The belt tensioner as set forth in claim 1, characterized in that said cylinder tube (42) is provided at one of its axial ends (42b) with a burstproof stop for the piston (44) and at its other end (42a) with a plug (55) comprising an axial passage (55a) and a burst disk (55b) closing the latter.

3. The belt tensioner according to claim 1, characterized in that a pyrotechnical propellant cartridge (70) is inserted into the interior of the piston (44) formed hollow, said propellant cartridge comprising two sleeve portions (70a, 70b) joined together by a rated breaking groove (72), one of said sleeve portions (70a) forming a bottom with an axial passage (70c) closed by a burst disk (70d) and the other one (70b) comprising a sealing lip (74) sealingly engaging the wall of the cylinder tube (42).

4. The belt tensioner as set forth in claim 2 or 3, characterized in that said linear drive unit comprising said cylinder tube (42), piston (44), propelling charge (50) and igniter (52) forms a preassembled unit.

5. The belt tensioner as set forth in claim 4, characterized in that said igniter (52) is formed as a percussion igniter having an impact pin (52a) protruding from an opening on an axial end of said piston.

6. The belt tensioner as set forth in any of the preceding claims, characterized in that said gear comprises a first gearwheel (24) with which said pinion (22) is coupled for joint rotation and a second gearwheel (26) meshing with said first gearwheel (24), said second gearwheel (26) being rigidly connected to a coupling ring (28), in that said coupling ring (28) surrounds a lateral drive projection (30) of the belt reel (16) and that between said drive projection (30) and said coupling ring (28) a plurality of coupling rolls (32) is arranged.

## Revendications

1. Tendeur de ceinture pour systèmes de retenue à ceintures de sécurité dans des véhicules, comprenant une unité pyrotechnique d'entraînement linéaire à piston et cylindre dont le piston (44) entraîne une crémaillère (46), et comprenant un mécanisme à engrenages à effet multiplicateur (22, 24, 26) qui, côté sortie, est relié à la bobine de ceinture (16) d'un enrouleur de ceinture et, côté entrée, comporte un pignon (22) qui est en prise avec la crémaillère, la crémaillère (46) étant réalisée le long de la surface périphérique du piston (44), et une charge propulsive pyrotechnique (50) étant disposée dans le piston creux, caractérisé en ce que le piston (44) est logé dans un tube cylindrique (42) qui est emmanché dans l'alésage (40) d'un carter d'engrenages (20) placé latéralement à l'enrouleur de ceinture et comporte, dans sa surface périphérique, une découpe (48) pour le passage du pignon (22).

2. Tendeur de ceinture selon la revendication 1, caractérisé en ce que le tube cylindrique (42) est muni, à l'une de ses extrémités axiales (42b), d'une butée inéclatable pour le piston (44) et, à l'autre extrémité (42a), d'un bouchon (55) comportant un passage axial (55a) et un disque d'éclatement (55b) qui ferme celui-ci.

3. Tendeur de ceinture selon la revendication 1, caractérisé en ce qu'à l'intérieur du piston creux (44) est logée une cartouche de charge propulsive pyrotechnique (70) qui comporte deux portions formant douilles (70a, 70b) qui sont reliées entre elles au niveau d'une gorge destinée à la rupture (72) et dont l'une (70a) forme un fond pourvu d'un passage axial (70c) fermé par un disque d'éclatement (70d) et l'autre (70b) comporte une lèvre d'étanchéité (74) qui crée une liaison étanche avec la paroi du tube cylindrique (42).

4. Tendeur de ceinture selon la revendication 2 ou 3, caractérisé en ce que l'unité d'entraînement linéaire constituée du tube cylindrique (42), du piston (44), de la charge propulsive (50) et d'une amorce (52) forme un ensemble préassemblé.

5. Tendeur de ceinture selon la revendication 4, caractérisé en ce que l'amorce (52) est conçue sous la forme d'une amorce à percussion et comporte une tige percutante (52a) qui sort par un orifice situé à l'une des extrémités axiales du piston.

6. Tendeur de ceinture selon l'une des revendications précédentes, caractérisé en ce que le mécanisme à engrenages comporte une première roue dentée (24) solidarisée en rotation au pignon (22) et une seconde roue dentée (26) qui s'engrène avec la première et est solidaire d'un anneau d'accouplement (28), en ce que l'anneau d'accouplement (28) entoure un prolongement latéral d'entraînement (30) de la bobine de ceinture (16), et en ce que plusieurs rouleaux d'accouplement (32) sont disposés entre le prolongement d'entraînement (30) et l'anneau d'accouplement (28).
